# EUROPEAN PATENT APPLICATION

(11) **EP 3 777 541 A1**
(43) Date of publication of application: **17.02.2021**
(21) Application number: 19774593.8
(22) Date of filing: 08.03.2019
(51) Int. Cl.: A21D 10/00, A21D 2/14, A21D 2/36, A21D 13/047, A21D 13/066, A21D 13/80

(54) **COMPOSITION FOR BAKED CONFECTION**

(30) Priority: 29.03.2018 JP 2018064351
(71) Applicant: Yanmar Power Technology Co., Ltd., Osaka-shi Osaka 530-0013 (JP)
(72) Inventor: IGUCHI Arisa, Osaka-shi, Osaka 530-0013 (JP); TSUCHIYA Kuniyasu, Osaka-shi, Osaka 530-0013 (JP)
(74) Representative: Poindron, Cyrille
(86) International application number: PCT/JP2019/009495
(87) International publication number: WO 2019/188145

(57) **Abstract**

The purpose of the present invention is to provide a composition for a baked confection, wherein a gluten-free baked confection having a best-before period and gustatory sensation (moistness, softness) equal to or better than those of a baked confection produced using flour can be produced using the composition. The composition for a baked confection according to the present invention contains cooked high-amylose rice, rice flour, and fats and oils and has a specific volume in a range of 0.2 to 1.5 ml/g, and is characterized in that the composition contains the high-amylose rice at 0.1 to 10% by mass, the rice flour at 5 to 15% by mass, and the fats and oils at 10 to 30% by mass.

## Description

### TECHNICAL FIELD

The present invention relates to a composition for a baked confection, and more specifically, relates to a composition for a baked confection capable of producing a gluten-free baked confection which includes a processed rice raw material containing high-amylose rice, and rice flour.

### BACKGROUND ART

Generally, baked confections such as madeleines and pound cakes contain wheat flour, eggs, and if necessary, a swelling agent and the like, and the moistness and softness are obtained due to the swelling of egg white or the swelling agent, as well as the viscosity and elasticity of the gluten included in the flour. However, because gluten is a protein that causes food allergy, people with a gluten allergy are unable to consume it.

From this perspective, the use of rice flour instead of wheat flour in baked confections has been proposed. However, baked confections that use rice flour instead of wheat flour readily age (readily harden), and because the swelling obtained at the time of production cannot be maintained for a long period of time, there is a problem that the best-before period becomes shorter than baked confections that use wheat flour. Therefore, in gluten-free baked confections in which the entire amount of the wheat flour used in the baked confection is replaced with rice flour, food additives such as thickeners and swelling agents are often used in order to maintain the moistness and softness. Alternatively, the moistness and softness are maintained by freezing (slowly or rapidly) the baked confection immediately after production.

As a solution to the problems described above with rice flour, Patent Literature 1 below discloses a processed rice raw material which is a gel form of high-amylose rice, and it is disclosed that food products to which the processed rice raw material is added can be provided with physical properties such as shape retention, low water separation, swelling, and high viscoelasticity. Furthermore, in Patent Literature 1 below, a baked confection that uses a processed rice flour raw material instead of the wheat flour, which serves as an ingredient of baked confections (such as sponge cake and choux pastry), is disclosed as an example of using the processed flour rice raw material.

### CITATION LIST

### Patent Literature

Patent Literature 1: PCT International Publication No. WO2014/199961

### DISCLOSURE OF INVENTION

### PROBLEMS TO BE SOLVED BY THE INVENTION

However, in the sponge cake and choux pastry and the like disclosed in Patent Literature 1 above, a foaming agent, a puffing agent, or a thickener is used, and in such baked confections it is desirable for a good gustatory sensation (moistness and softness) to be maintained without the use of a food additive such as a foaming agent or a puffing agent (hereinafter, these are collectively referred to as swelling agents), or a thickener.

Therefore, an object of the present invention is to provide a composition for a baked confection capable of producing a gluten-free baked confection having a texture (moistness and softness) and best-before period equal to or better than those of a baked confection produced using wheat flour.

### MEANS FOR SOLVING THE PROBLEMS

According to the present invention, a composition for a baked confection is provided which contains cooked high-amylose rice, rice flour, and fats and oils, and has a specific volume in a range of 0.2 to 1.5 ml/g, wherein the composition contains the high-amylose rice at 0.1 to 10% by mass, the rice flour at 5 to 15% by mass, and the fats and oils at 10 to 30% by mass.

In the composition for a baked confection described above, it is preferable that:
(1) the content of the high-amylose rice is 1 to 2% by mass,
(2) sugar is included as a residual ingredient in addition to the high-amylose rice, the rice flour, and the fats and oils in an amount of 10 to 40% by mass,
(3) egg white is included as a residual ingredient in addition to the high-amylose rice, the rice flour, and the fats and oils in an amount of 15 to 30% by mass, and
(4) the baked confection is any one of a financier cake, a madeleine, a pound cake, or a butter cake.

### EFFECT OF THE INVENTION

The composition for a baked confection of the present invention, while being a composition for a gluten-free baked confection, enables the production of a baked confection having a gustatory sensation (moistness and softness) equal to or better than a baked confection using wheat flour without the use of a food additive such as a swelling agent or a thickener. Furthermore, the baked confection does not readily age (readily harden), and is capable of maintaining a good gustatory sensation over a long period of time, even when stored at room temperature. Note that, in the present specification, "aging" in a baked confection refers to a state where the water retention has decreased, the moistness and softness have been lost, and the baked confection has become hard.

Moreover, according to the composition for a baked confection of the present invention, a baked confection having a sufficient swelling can be produced without the use of a swelling agent, and further, a baked confection can also be provided which is capable of maintaining the swelling over a long period of time.

In addition, by including cooked high-amylose rice, the baked confection can be provided with a new chewy texture.

### DESCRIPTION OF EMBODIMENTS

In the present specification, "chewy (elastic and viscous)" refers to a texture having both an elasticity and viscosity like mochi.

A composition for a baked confection of the present invention is a composition for producing a baked confection having a specific volume in a range of 0.2 to 1.5 ml/g, and an important feature is that the composition contains the high-amylose rice at 0.1 to 10% by mass, the rice flour at 5 to 15% by mass, and the fats and oils at 10 to 30% by mass.

Note that a baked confection having a specific volume in a range of 0.2 to 1.5 ml/g refers to a baked confection represented by a financier cake, a madeleine, a pound cake, or a butter cake as mentioned above, in which moistness and softness are important elements of the gustatory sensation. That is to say, the baked confection targeted by the present invention does not include baked confections having a specific volume smaller than the above range but the softness does not become problematic, and baked confections having a specific volume larger than the above range but the retention of swelling after production does not become problematic.

In the present invention, it is desirable for cooked high-amylose rice to be used in a gel state obtained as a result of a phase transition from a paste (sol) to a gel caused by subjecting the paste to a mechanical stirring process. As a result, the amylose contained in the high-amylose rice is included in the composition for a baked confection in a mesh-like gel state, and because the entry of water and oil into the large number of small spaces formed inside the mesh results in the water and oil being physically surrounded by the amylose mesh, the release of the water and oil is inhibited. Consequently, in the composition for a baked confection of the present invention, aging is suppressed, and functions such as the water retention and the emulsifying characteristics are significantly improved.

Furthermore, by emulsifying the fats and oils in the composition of the baked confection, the air bubbles formed when expanding the dough are less likely to collapse because the surroundings of the air bubbles are coated by the fats and oils. Therefore, a fine and soft baking finish becomes possible without the use of a swelling agent or the like, and the baking finish can be realized over a long period of time due to an improvement in the water retention as mentioned above.

### (High-amylose rice)

In the composition for a baked confection of the present invention, the composition contains the high-amylose rice at 0.1 to 10% by mass, and more preferably contains the high-amylose rice at 1 to 2% by mass.

High-amylose rice is rice whose starch has a high amylose content, and although it generally refers to rice having an amylose content of 25% by mass or more, the amylose content can sometimes vary depending on the weather or the like.

The variety of high-amylose rice can be either a Japonica variety or an Indica variety, and examples include Momiroman, Yumetoiro, Hoshiyutaka, Hoshinishiki, Mirenishiki, Chugoku No. 134, Echinokaori, and Mizuhochikara. Among the varieties mentioned above, Momiroman or Yumetoiro are preferably used. The extent of polishing of the rice does not matter, and the high-amylose rice may be in any state among brown rice, half-polished rice, and white rice. A mixture of two or more different varieties of high-amylose rice may also be used.

### [Cooked high-amylose rice]

In the composition for a baked confection of the present invention, it is preferable for cooked high-amylose rice that has been cooked (heated) to be used in a gel state obtained after performing a mechanical stirring process. As a result of using a high-amylose cooked rice in this state, the target baked confection can be provided with a new chewy texture.

Although the amount of water used when cooking (heating) the high-amylose rice depends on the amylose content of the rice, it is normally 1 or more times the amount of the high-amylose rice, and more specifically, it is preferably 1 to 6 times, and more preferably 2 to 4 times the amount of the high-amylose rice. When the water content is in the above range, the viscosity of the gel material of the cooked rice can be maintained in an appropriate range, and the obtained baked confection can be provided with a chewy texture.

The high-amylose rice may be immersed in water prior being cooked. The immersion time is not particularly limited and is usually about 10 to 120 minutes, but during winter when the water absorbency or water content of rice is relatively low, it may be desirable to immerse the rice for a duration that exceeds the above range.

The high-amylose rice can be cooked using a known heating means such as a rice cooker, a pot, a pressure cooker, an electromagnetic cooker (such as an induction heating cooker), a microwave oven, or a steam oven.

It is difficult to unambiguously identify the heating conditions such as temperature, pressure, and time because they vary depending on the heating means, the amount of water, and the like, however, the time is appropriately adjusted to a time that allows the rice to sufficiently gelatinize without becoming burnt. For example, the adjustment may be made according to a condition mode (such as porridge mode) built into the heating means. The lower limit of the heating temperature is usually 25°C or higher, preferably 60°C or higher, and more preferably 80°C or higher. The upper limit is 130°C or lower, preferably 120°C or lower, and more preferably 100°C or lower. The heat treatment may be performed not only with heating but also with pressurization, and in this case a temperature condition outside the above range may be preferable.

The water used for cooking (heating) is in the liquid form, and water, a substance other than water (e.g. milk, vegetable milk such as soy milk (unadjusted soy milk and adjusted soy milk), coconut milk, and almond milk, and vegetable protein), and mixtures of these substances can be appropriately selected and used according to the type of target baked confection.

After the rice is cooked (heated), a cooling process may be carried out before the mechanical stirring process. As a result, it is possible to obtain a gel material having a lower viscosity than when the cooling treatment is not performed. The temperature after cooling at the time of the cooling process is normally 60°C or lower.

### [Gel material of cooked rice]

As a result of subjecting the gelatinized (sol) cooked rice obtained from the cooking (heating) process to a mechanical stirring process, a phase transition to a gel material occurs in the cooked high-amylose rice. Therefore, by adjusting the conditions of the mechanical stirring process, it is possible to adjust the hardness and texture that match the target baked confection.

The mechanical stirring process refers to stirring which is capable of destroying tissue by physical movement, and is different from a simple mixing process. The mechanical stirring process may be performed using a stirring device such as a food processor, a homogenizer, a mixer, a kneader, a mulling machine, or an extruder. The stirring device preferably has a large torque so that the stirring is not hindered even when the viscosity of the gelatinized product increases during the mechanical stirring process. Examples of the stirring device having a large torque include a cutter mixer (e.g. Robot Coupe, BLIXER-5Plus, FMI Corporation).

The conditions of the mechanical stirring process can be appropriately determined depending on the state of the cooked rice, the type of stirring device, and the like. For example, the rotation speed under no load is preferably 1,000 to 3,000 rpm, more preferably 1,200 to 2,000 rpm, and even more preferably 1,500 to 1,800 rpm. Also, the optimum conditions can be selected as appropriate by reducing the rotation speed but taking a correspondingly longer time, or performing pressure molding while stirring with a low-speed screw at about 60 rpm.

As a result, a gel material of the cooked high-amylose rice is obtained having a good texture and an appropriate hardness as a gel. Here, a good texture refers to the texture obtained in a state where the value of tan δ described below is small. An appropriate hardness as a gel refers to, for example, a hardness that is softer than agar.

The overall hardness of the gel material can be evaluated by the complex elastic modulus. The complex elastic modulus G* is the sum of an elastic component and a viscous component as described in Japanese Patent No. 5840904 B2, and represents an overall hardness. Specifically, the complex elastic modulus G* is represented by a vector length when the storage elastic modulus G' is taken as X axis and the loss elastic modulus G" is taken as the Y axis. The storage elastic modulus G' is elasticity information. The loss elastic modulus G" is viscosity information.

The complex elastic modulus G* of the gel material of the cooked rice used in the present invention is preferably 1,000 Pa or more, and more preferably 1,500 Pa or more. If the complex elastic modulus G* is too small, the hardness of the gel material becomes insufficient, and therefore, the baked confection cannot be provided with a chewy texture in some cases. On the other hand, if the complex elastic modulus G* is too large, the gel material becomes too hard, and there is a concern that an inconvenience may occur such as the gel material being unable to be uniformly mixed with other materials, or a large load being applied to the stirring device even when uniform mixing can be achieved.

The texture of the gel material of the cooked rice used in the present invention can be comprehensively evaluated by the value of tan δ, which is a viscosity/elasticity ratio. As the value of tan δ becomes smaller, the properties of an elastic body become stronger. That is to say, the properties of an elastic body, which undergoes deformation according to an applied force and returns to the original shape upon removal of the applied force, become stronger. As the value of tan δ becomes larger, the properties of a viscous body become stronger. That is to say, the properties of a viscous body, which undergoes deformation according to an applied force and does not return to the original shape upon removal of the applied force, become stronger.

The viscosity/elasticity ratio tan δ is specifically calculated by the equation tan δ = G"/G'. The value of δ refers to the angle between the vector of the complex elastic modulus G* and the storage elastic modulus G' (X axis).

The viscosity/elasticity ratio tan δ of the gel material is preferably 0.3 or less, and more preferably 0.2 or less. When the viscosity/elasticity ratio tan δ is too large, that is to say, when the properties of a viscous body become dominant, the stirred gel material becomes a sol (paste). In some cases, a gel material that has become a paste is unable to provide the baked confection with a sufficiently chewy texture.

The gel material maintains good hardness and texture even after storage. For example, the good hardness and texture described above are maintained even after about three days to two weeks at 4 to 25°C.

### (Rice flour)

The composition for a baked confection of the present invention contains rice flour in an amount of 5 to 15% by mass. As a result of using rice flour in place of the wheat flour used in conventional baked confections, it is possible to provide gluten-free baked confections.

Rice flour is a powder obtained by pulverizing raw rice. The rice used as the raw material of the rice flour may be either non-glutinous rice or glutinous rice, but non-glutinous rice is particularly preferable. The non-glutinous rice may be, for example, Japonica rice, Indica rice, or Javanica rice, and further, may be rice of various varieties belonging thereto. Examples of rice varieties include, but are not limited to, Takanari, Mizuhochikara, Yumefuwari, and other varieties suitable as rice for rice flour, or ordinary varieties such as Koshihikari and Akitakomachi. In addition to the high-amylose rice described above, varieties having a medium or low amylose content may also be used. The rice flour may be a mixture of various varieties of rice flour. Further, the rice flour may be pregelatinized rice flour obtained by pregelatinizing rice by heating, followed by drying and processing into a powder.

### (Fats and oils)

The composition for a baked confection of the present invention contains fats and oils in an amount of 10 to 30% by mass.

The fats and oils may be either vegetable fats and oils or animal fats and oils. The vegetable fats and oils may be any vegetable fat or oil, and the production method thereof is not particularly limited. Examples of vegetable fats and oils include rapeseed oil (canola oil and salad oil), soybean oil, sunflower seed oil, cottonseed oil, peanut oil, safflower oil, rice oil (rice bran oil), corn oil, safflower oil, olive oil, kapok oil, sesame oil, evening primrose oil, coconut oil, palm oil, palm kernel oil, shea oil, sal butter, cacao butter, coconut oil, perilla oil, lavender oil, mango kernel oil, and processed fats and oils made from at least one of these. The animal fats and oils may be any animal fat or oil, and the production method thereof is not particularly limited. Examples of animal fats and oils include beef tallow, lard, fish oil, whale oil, butter derived from dairy raw materials, milk fats such as fresh cream, and processed fats and oils made from at least one of these. Examples of processed fats and oils include hydrogenated oil, transesterified oil, and fractionated oil. Among these, vegetable fats and oils or functional fats and oils are preferable. Examples of functional fats and oils include functional vegetable fats and oils such as olive oil and coconut oil, and animal fats and oils such as docosahexaenoic acid (DHA) and eicosapentaenoic acid (EPA), and a combination of two or more of these can also be used.

Although the fats and oils can be appropriately selected from those mentioned above according to the target baked confection, it is particularly preferable to use fats and oils that are conventionally used in baked confections such as butter (unsalted or salted), margarine and shortening, as well as rice oil and the like. In particular, it is preferable to use butter because it is possible to provide the baked confection with superior flavors such as moistness.

In the composition for a baked confection of the present invention, by including the cooked high-amylose rice, the moistness is not lost when the amount of the fats and oils (butter) is reduced by up to 60% by mass compared to the amount which is generally used, and a masking effect with respect to the odorous components of egg white and the like is also obtained, and therefore, it is possible to reduce calories without spoiling the gustatory sensation.

### (Residual ingredients)

The composition for a baked confection of the present invention has the high-amylose rice, the rice flour, and the fats and oils as essential ingredients, and contains the high-amylose rice at 0.1 to 10% by mass, the rice flour at 5 to 15% by mass, and the fats and oils at 10 to 30% by mass, and further, the residual ingredients constituting the composition can be appropriately determined depending on the target baked confection.

Therefore, although the residual ingredients of the composition depend on the type of target baked confection, the residual ingredients include sweeteners, eggs, and powders, as well as the water included in the cooked high-amylose rice and the like. Note that, for example, ingredients that do not form the dough (base) of the baked confection, such as the dry fruits and nuts in a pound cake (fruit cake) or the like, are not considered constituent ingredients of the composition of the present invention.

Examples of the sweetener include sugars such as sugar (sucrose), glucose (D-glucose), fructose (D-fructose), maltose, lactose, D-galactose, D-mannose, D-ribose, D-xylose, L-arabinose, and monosaccharides classified as rare sugars (such as L-allose, L-gulose, L-glucose, L-galactose, L-altrose, L-idose, L-mannose, L-talose, D-talose, D-idose, D-altose, D-gulose, D-allose, L-psicose, L-sorbose, L-fructose, L-tagatose, D-tagatose, D-sorbose, D-psicose, and L-ribose), trehalose, dextrin, starch syrup, honey, maple syrup, oligosaccharides and isomerized sugars; sugar alcohols such as sorbitol, maltitol, lactitol, sugar alcohols derived from monosaccharides classified as rare sugars (such as xylitol and erythritol); and non-sugar sweeteners such as aspartame, sucralose, acesulfame K, stevioside, thaumatin, glycyrrhizin, saccharin, and dihydrochalcone.

Of the examples above, it is preferable to use sugar. Although the amount of sugar is not limited to this, it is desirable that the amount of sugar included in the composition is 10 to 40% by mass.

In addition to using whole eggs, the egg white and the egg yolk of the egg can be used individually depending on the type of target baked confection. As mentioned above, the present invention is effective when egg white is included because the inclusion of the cooked high-amylose rice in a gel state enables the bubbles from the egg white to be maintained without the use of a swelling agent.

The amount of egg cannot be unconditionally specified because it depends on the type of target baked confection and the like, but in the case of egg white it is preferably included in the composition at 15 to 30% by mass.

The powders mentioned above are powders excluding wheat flour that are used in addition to the rice flour, which is an essential ingredient, and examples include almond poudre (almond powder), cocoa powder, matcha powder, and spices.

Furthermore, the water contained in the cooked high-amylose rice and, if necessary, a liquid such as fruit puree or paste, fruit juice, or a liqueur may be appropriately included in the composition according to the type of target baked confection.

The composition for a baked confection of the present invention has the cooked high-amylose rice, the rice flour, and the fats and oils as essential ingredients, and contains the high-amylose rice in a range of 0.1 to 10% by mass, the rice flour in a range of 5 to 15% by mass, and the fats and oils in a range of 10 to 30% by mass. Although not limited to the following examples, preferable ingredient compositions for a specific example of a baked confection are presented below.

### [Financier Cake]

The composition preferably contains the high-amylose rice at 0.1 to 2.0% by mass, the rice flour at 5 to 15% by mass, butter at 13 to 30% by mass, almond poudre at 6 to 18% by mass, sugar at 16 to 33% by mass, and egg white at 15 to 30% by mass.

### (Baked confection and production method thereof)

Examples of baked confections that can be produced using the composition for a baked confection of the present invention having a specific volume in a range from 0.2 to 1.5 ml/g, which are baked confections in which gustatory sensations such as softness and moistness are important, include financier cakes, madeleines, pound cakes, butter cakes as mentioned above, and also dacquoises, waffles, and baumkuchen.

Although baked confections produced using the composition for a baked confection of the present embodiment can be produced by a conventionally known procedure according to the target baked confection, in order to obtain the superior effects of the cooked high-amylose rice, it is preferable to use the cooked high-amylose rice in a gel state.

Furthermore, when the gel material is mixed with other ingredients, it is preferable to heat the gel material of the cooked high-amylose rice at a temperature of 80 to 90°C for 1 minute or more to lower its viscosity. The heating causes the gel material of the cooked high-amylose rice to become a sol (a paste having fluidity), and it is possible to avoid lumps when it is mixed with the other ingredients.

It is desirable for the cooked high-amylose rice to be blended in with the fats and oils in the composition and emulsified before being mixed with powders such as the rice flour. As a result, when the cooked (sol) high-amylose rice and powders such as the rice flour are mixed, they become well blended with each other and the fats and oils and the powders become very finely mixed. Therefore, when baked, it is possible to obtain a baked confection having a large swelling, and a fine and moist texture. Moreover, the texture also has an excellent persistence.

The dough is prepared by mixing the powders with the cooked high-amylose rice that has been emulsified as a result of being mixed with the fats and oils, and then mixing the sugar, eggs (egg white), and the like into the resulting mixture. The target baked confection can be produced by placing the prepared dough into a mold, and then baking it. The baking temperature depends on the composition, the size of the mold, and the like, and although not limited to the following, it is preferable to perform the baking at a temperature of 150 to 200°C for about 15 to 20 minutes. Examples

The present invention will be specifically described by the following experimental examples, but the present invention is not limited to the following experimental examples.

### (Example 1)

As the composition for a financier cake, a gel material obtained by mechanically stirring egg white, granulated sugar, almond poudre (almond powder), rice flour, unsalted butter, and cooked high-amylose rice was prepared.

In addition, two types of gel materials obtained by mechanically stirring cooked high-amylose rice were prepared, namely a material obtained by cooking white rice, which had an amylose content of 25% or more, and water in a weight ratio of 1:2, and then causing a phase transition to a gel by mechanical stirring (product name: Rice gelée hard type, manufacturer: Rice Technology Kawachi Co., Ltd., hereinafter referred to as "hard type"), and a material obtained by cooking white rice, which had an amylose content of 25% or more, and water in a weight ratio of 1:4, and then causing a phase transition to a gel by mechanical stirring (product name: Rice gelée soft type, manufacturer: Rice Technology Kawachi Co., Ltd., hereinafter referred to as "soft type").

The hard type gel material was used in samples No. 2 to 4 of the composition for a financier cake, and the soft type gel material was used in sample No. 5 of the composition for a financier cake. All of these gel materials were refrigerated and stored at a temperature of 0 to 10°C until immediately before use. Note that the gel material of the high-amylose rice was not used in samples No. 1 and 6 of the compositions for a financier cake.

The compositions (samples No. 1 to 6) of the compositions for a financier cake are shown in Table 1.

**[Table 1]**

| Sample No. | NO . 1 | | NO . 2 | | NO . 3 | | NO . 4 | | NO. 5 | | NO. 6 | |
|---|---|---|---|---|---|---|---|---|---|---|---|---|
| Ingredient | [g] | [%] | [g] | [%] | [g] | [%] | [g] | [%] | [g] | [%] | [g] | [%] |
| Egg white | 40 | 27.6 | 40 | 27.3 | 40 | 26.5 | 40 | 30.5 | 40 | 22 | 40 | 32 |
| Sugar | 35 | 24.1 | 35 | 23.9 | 35 | 23.2 | 35 | 26.7 | 35 | 20 | 35 | 28 |
| Almond poudre | 15 | 10.3 | 15 | 10.2 | 15 | 9.9 | 15 | 11.5 | 15 | 13 | 15 | 12 |
| Rice flour | 15 | 10.3 | 15 | 10.2 | 15 | 9.9 | 15 | 11.5 | 15 | 10 | 15 | 12 |
| Butter (fat and oil) | 40 | 27.6 | 40 | 27.3 | 40 | 26.5 | 20 | 15.3 | 40 | 20 | 20 | 16 |
| Rice gel | 0 | 0.0 | 1.5 | 1.0 | 6 | 4 | 6 | 4.6 | 27 | 15 | 0 | 0 |
| High-amylose rice | 0 | 0.0 | 0.5 | 0.3 | 2 | 1.3 | 2 | 1.5 | 9 | 3 | 0 | 0 |

### [Production procedure]

(1) The gel material of the cooked high-amylose rice was taken out of the refrigerator and heated in a hot water bath. Use of the hot water bath was continued until the core temperature of the gel material reached 85°C, and this state was maintained for 5 minutes or more so that the gel material became a sol material (paste) that was soft enough to flow.
2) The rice flour and almond poudre were each passed through a confectionery sieve to remove lumps.
(3) After beating together the egg white and granulated sugar, the sieved rice flour and almond poudre from (2) above were added and mixed.
(4) While melting the butter, the sol material from (1) above was added and mixed to obtain a burnt butter containing the cooked high-amylose rice.
(5) The products from (3) and (4) above were mixed and poured into a mold.
(6) The mold the dough was poured into was placed in an oven preheated to 170 and baked for 15 to 20 minutes.

### [Specific volume measurement]

The specific volume (ml/g) was measured for the obtained financier cakes by a method which uses the volume weight of white rice. In this method, the volume weight of white rice with the same production area, variety, rice polishing period, and preservation state (in the present experimental example, 2017 Kinuhikari produced in Osaka, 12.08 (ml/g)) was used to calculate the volume of the sample by subtracting, from the volume of white rice that fills a container with a fixed volume, the volume of white rice that fills the same container after being filled with the sample (financier) and white rice.

### [Sensory evaluation]

The moistness and softness of the obtained financier cakes were evaluated directly after production and after being stored at room temperature for 10 days. Sample No. 1, to which the cooked high-amylose rice was not added, was used as a reference, and sensory evaluations comparing the samples No. 2 to 5 with sample No. 1 were performed. Furthermore, samples No. 7 and 8 of the compositions for a financier cake were prepared with the compositions listed in Table 3, and sensory evaluations comparing the samples to sample No. 1 were performed.

The evaluation criteria of the sensory evaluations were as shown in Table 2 below, and the results are shown in Table 3.

**[Table 2]**

| Evaluation method: Day 0 = compared to No. 1 (reference) / Day 10 = compared to Day 0 (change over time) | | |
|---|---|---|
| Points | Moistness | Softness |
| 4 | Too moist | Too soft |
| 3 | Very moist | Very soft |
| 2 | Moist | Soft |
| 1 | Somewhat moist | Somewhat soft |
| 0 | No substantial difference | No substantial difference |
| -1 | Somewhat dry | Somewhat hard |
| -2 | Dry | Hard |
| -3 | Very dry | Very hard |
| -4 | Too dry | Too hard |

**[Table 3]**

| Sample N o. | High-amylose rice | Rice flour | Fats and oils | Specific volume [mL/g] | Moistness | | Softness | |
|---|---|---|---|---|---|---|---|---|
| | [mass %] | [mass %] | [mass %] | | Day 0 | Day 10 | Day 0 | Day 10 |
| NO. 1 (reference) | 0.0% | 10.3% | 27.6% | 0.677 | - | -3 | - | -3 |
| NO. 2 | 0.3% | 10.2% | 27.3% | 0.466 | 1 | 1 | 0 | -1 |
| NO. 3 | 1.3% | 9.9% | 26.5% | 0.468 | 2 | 2 | 1 | 1 |
| NO. 4 | 1.5% | 11.5% | 15.3% | 0.439 | 3 | 3 | 2 | 2 |
| NO. 7 | 1.0% | 10.0% | 20.0% | 0.436 | 3 | 3 | 3 | 3 |
| NO. 8 | 1.6% | 8.0% | 20.0% | 0.490 | 4 | 4 | 2 | 2 |
| NO. 5 | 3.0% | 10.0% | 20.0% | 0.413 | 3 | 3 | 3 | 3 |

### (Example 2)

The financier sample No. 1 above, to which the cooked high-amylose rice was not mixed, the financier sample No. 6 above, which had the same composition as sample No. 1 except for the content of butter being reduced to 50% (0% cooked high-amylose rice), and the financier sample No. 4 above, which had the same composition as sample No. 1 except for the content of butter being reduced to 50% and mixing 1.5% of the cooked high-amylose rice, were compared and subjected to sensory evaluations with respect to the flavor.

The financier sample No. 6, to which the cooked high-amylose rice was not mixed, had only a small amount of butter and caused an odor of egg white to be experienced compared to the financier sample No. 1. In contrast, it was found that in the financier sample No. 4, to which 1.5% of the cooked high-amylose rice was mixed, an odor of egg white was not experienced despite the small amount of butter, and the flavor was good.

## Claims

1. A composition for a baked confection containing cooked high-amylose rice, rice flour, and fats and oils, and has a specific volume in a range of 0.2 to 1.5 ml/g, wherein
the composition contains the high-amylose rice at 0.1 to 10% by mass, the rice flour at 5 to 15% by mass, and the fats and oils at 10 to 30% by mass.

2. The composition for a baked confection according to claim 1, wherein
the content of the high-amylose rice is 1 to 2% by mass.

3. The composition for a baked confection according to claim 1 or 2, wherein
sugar is included as a residual ingredient in addition to the high-amylose rice, the rice flour, and the fats and oils in an amount of 10 to 40% by mass.

4. The composition for a baked confection according to any one of claims 1 to 3, wherein
egg white is included as a residual ingredient in addition to the high-amylose rice, the rice flour, and the fats and oils in an amount of 15 to 30% by mass.

5. The composition for a baked confection according to any one of claims 1 to 4, wherein
the baked confection is any one of a financier cake, a madeleine, a pound cake, or a butter cake.
